# EUROPEAN PATENT SPECIFICATION

(11) **EP 1 033 073 B1**
(45) Date of publication and mention of the grant of the patent: **12.06.2002**
(21) Application number: 00104067.4
(22) Date of filing: 28.02.2000
(51) Int. Cl.: A01K 27/00

(54) **Harness for dogs or other animals**
Führungsgurt für Hunde oder andere Tiere
Harnais pour chien ou autres animaux

(30) Priority: 02.03.1999 IT TO990154
(43) Date of publication of application: 06.09.2000
(73) Proprietor: L.A.C. S.n.c. di Albertengo & C., 10060 S. Secondo di Pinerolo (TO) (IT)
(72) Inventor: Franco, Andreino, I-10060 Roletto (TO) (IT); Bocchiardo, Livio, I-10060 Pinerolo (TO) (IT)
(74) Representative: Robba, Pierpaolo

(56) References cited:
- US-A- 5 247 905
- US-A- 5 503 113
- US-A- 5 713 308

## Description

The present invention relates to a harness or breast collar for attaching a leash to a domestic animal or pet such as a dog.

More particularly, the invention concerns a harness of the type comprising a first strap portion extending under the animal belly, a second strap portion extending under the animal neck, and an upper strap portion joining together the ends of such straps, generally in a releasable manner, thus providing an anchoring point for attaching a leash.

As it is known harnesses are generally assembled by joining together portions of leather or nylon straps by means of fasteners such as for example rings, plates or clips made of metal or plastic.

These harnesses are built with different dimensions to fit dogs of different size, and generally comprise systems for adjusting the length of the straps for properly fitting the harness to a given animal for preventing the animal from accidentally getting free without unduly limiting the animal movements with a too tight harness.

A known adjustable animal harness is disclosed in US 5,247,905. The disclosed harness comprises a belly or body strap and a front strap the ends of which are joined together by metal plates provided with slits, a lower strap to be located between the animal legs and connecting the belly strap with the front strap, and an upper connecting member joining said two connecting plates, provided with a releasable clip and two rings for the attachment of a leash.

The upper connecting member consists of two portions of strap, one for each side of the harness, connecting the metal plates with a portion of the releasable clip and with a metal ring.

For the manufacturing of this kind of harness are therefore necessary at least five portions of strap and at least ten seams, or heat seals, two for each strap.

Moreover, in the harness disclosed in the above mentioned patent, both the lengths of the belly and the front straps can be adjusted. To this aim each strap is provided at one end with a strap adjustment system having a slidably movable buckle for folding back a portion of the strap in order to shorten its length.

Such adjustment system is asymmetric since the length of a strap can be adjusted only at one of its ends. As a consequence, after a shortening or a lengthening operation, the lower connecting strap moves out from the optimal position that is centred between the animal legs.

On this account in the known harnesses of this type the lower connecting strap that joins the belly strap with the front strap is not fixed, but rather is free to slide along the straps to which it is connected.

Apparently this trick solves the above mentioned problem, but nevertheless it brings about other inconveniences. Namely when the harness is fitted to a dog, the connecting strap can be wrongly positioned, for example laterally displaced, thus either slowing down the harness application, or negatively affecting a proper fitting, and therefore the harness safety, if the user does not realise the wrong position of the strap.

A first object of the present invention is therefore to realise a harness consisting of a limited number of strap portions and, consequently, a limited number of seams or heat seals, and that can be manufactured easily and at low cost.

Another object of the present invention is to provide an harness having an adjustment device which is symmetric and particularly safe.

The above objects of the present invention are accomplished through a harness as claimed in the attached claims.

According to the invention the harness has a particular strap configuration which allows to realise the same harness using a limited number of strap portions and seams or thermal seals.

Moreover, thanks to a symmetric adjustment device present on both sides, the harness of the invention has improved safety characteristics when compared with the prior art articles and allows, thanks to the fixed lower connecting strap, to cover part of the same straps with a soft or padded material, for an improved comfort of use.

The above objects will become evident from the following detailed description of preferred embodiments of the harness according to the invention, with particular reference to the attached drawings, in which:
Fig. 1 is an overall view of a first embodiment of a harness according to the invention;
Fig. 2 is an overall view of a second embodiment of a harness according to the invention;
Fig. 3 is an overall view of a third embodiment of a harness according to the invention;
Fig. 4 is a schematic view of a harness according to the invention; and
Fig. 5 shows a harness according to the invention when applied to a dog.

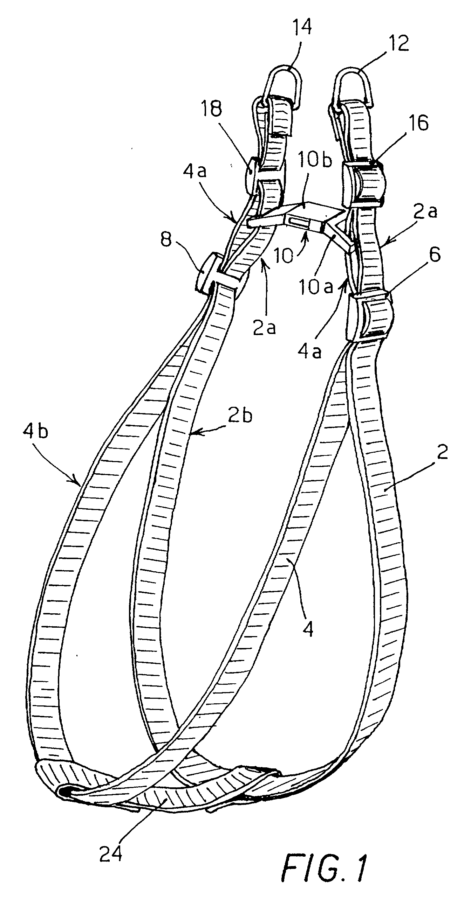

With reference to Fig. 1 a harness according to the invention comprises a belly or body strap 2b to be positioned under the animal belly, a front strap 4b extending along the front area of the neck, a lower connecting strap 24 for joining the belly strap 2a to the front strap 4a and an upper connecting element 2a, 2b, 10 for closing the harness on the upper part by means of a first 10a and a second 10b portion of a releasable clip 10. Two rings 12 and 14, connected to the upper connecting element, allows to attach a leash. Preferably the front strap 4b is slightly shorter than the belly strap 2b.

The belly strap 2b, the front strap 4b and part of the upper connecting element 2a, 2b are realised by the combination of only two strap portions 2 and 4, joined together in two lateral connecting points, by means of a first 6 and a second 8 buckle, and at their ends, by means of a seam or heat seal, in correspondence of the two rings 12 and 14.

The upper portions of the straps 2 and 4 remaining over the two buckles 6 and 8, with the releasable clip 10, form therefore the upper connecting element suitable for closing the harness in the upper part.

In particular the two portions 10a and 10b of the releasable clip 10 are slidably inserted on two upper portions 2a and 4a of the straps 2 and 4. Their movement on the straps is limited in the lower part by the same buckles 6, 8 and in the upper part by stop buckles 16 and 18, intentionally inserted in the straps, which can be moved as desired.

Adjusting the stop buckles 16 and 18 it is therefore possible to regulate, in a simple, quick way, and symmetrically on both sides, the internal size of the harness. Indeed, if the clip 10 is locked near the buckles 6 and 8, the harness fits small size animals while, moving the clip 10 on the upper part of the two upper portions 2a, 4a, it is possible to adapt the harness to big size animals.

A further adjustment of the harness is possible moving downward the buckles 6 and 8, shortening consequently the length of the belly strap 2b and the front strap 4b.

The lower connecting strap 24, joining the belly strap 2b with the front strap 4b, can be sliding, as shown in figure 1, but also fixed, sewn or heat sealed to the other straps, in that the adjustment of the harness is completely symmetrical.

The harness described above therefore can be advantageously realised using only two straps 2, 4 joined by only two seams or heat seals, and eventually one more strap portions forming the lower connecting strap provided with two further seams or heat seals.

The reduced number of parts forming the harness and the reduced number of seams or heat seals allow to greatly reduce the manufacturing costs and, contemporaneously, allow to increase the intrinsic quality of the product, in that it is highly reduced the probability of having a defective seam or heat seal.

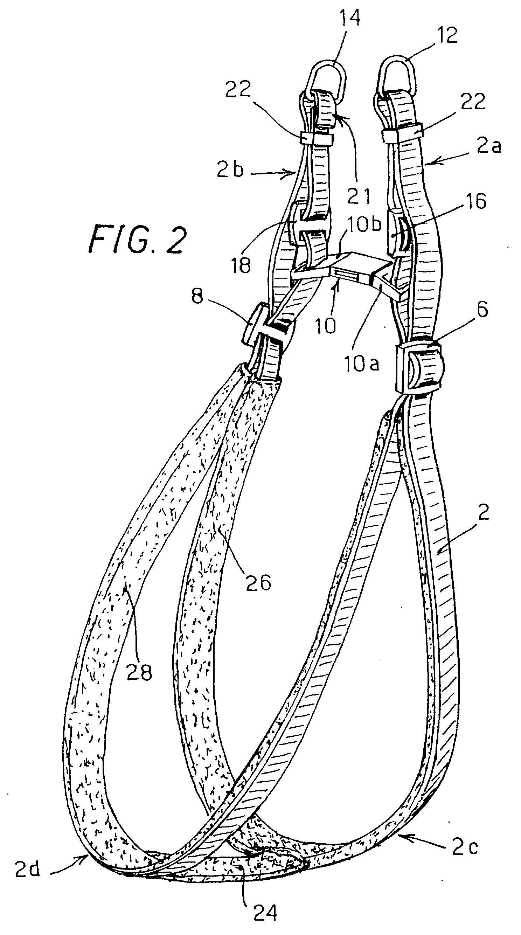

In figure 2 it is shown a second embodiment of a harness according to the invention, wherein the number of straps forming the harness is further reduced.

The harness of figure 2 in fact is realised using only one strap 2 whose ends are joined by a seam or heat seal, in point 21, for forming a loop ring.

The loop ring strap 2 is folded over itself in two points, in correspondence of the two rings 12 and 14 used for attaching a leash, in order to form two half rings. Such half rings are partially overlapped, for forming a first 2a and a second 2b part of an upper connecting element, and partially separated for forming a belly strap 2c and a front strap 2d.

Laterally the two half rings are joined in two lateral connecting points by means of two buckles 6, 8.

The two portions 2a and 2b of the strap 2 placed above the buckles 6 and 8 act as a support for a first 10a and a second portion 10b of a releasable clip 10, slidably inserted into the same straps.

Moving the clip 10 along the upper portions of the straps 2a and 2b, it is therefore possible to adjust the internal size of the harness.

The position of the clip 10 is limited superiorly by two buckles 16 and 18, intentionally inserted in the straps.

Two plastic small rings 22 keep joined the strap portions 2a and 2b near the points where the strap 2 is folded over itself.

In this embodiment the belly strap 2c and the front strap 2d are covered internally by a soft material allowing the perspiration 26, 27, and are joined in the middle by a fixed spacing strap 24, also padded. The same harness however can be realised with classic straps not padded.

This embodiment therefore allows to reduce further the number of pieces making up the harness, and, consequently, the number of seams and/or heat seals.

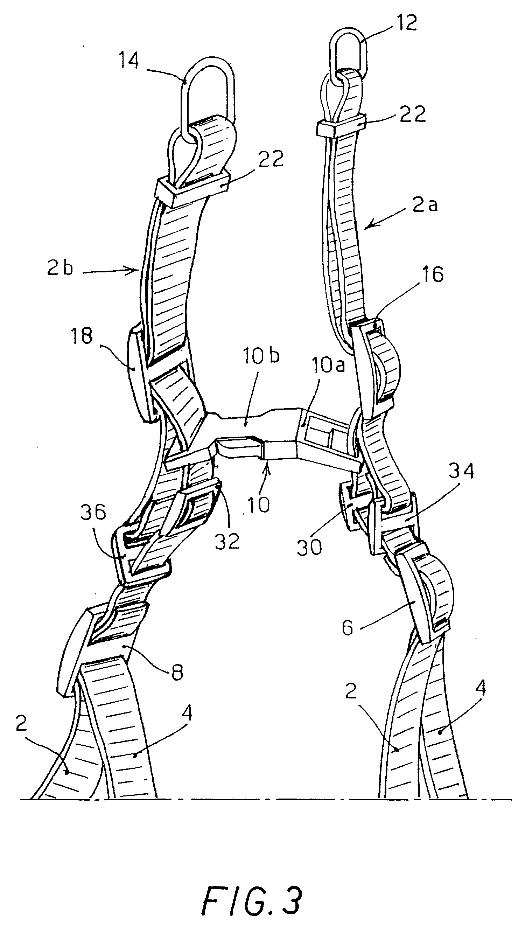

In figure 3 it is shown a third embodiment of a harness according to the invention.

The harness of figure 3 has been realised using two straps, a longer strap 2 and a shorter strap 4, joined by means of a seam or heat seal in two lateral connecting points, in correspondence of two buckles 6 and 8.

The longer strap 2 continues upwardly, beyond the buckles 6 and 8, forming two upper strap portions 2a, 2b supporting a releasable clip 10 and two metal rings 12, 14 used for attaching a leash.

The clip 10 is made of two portions 10a, 10b, slidably inserted into the strap portions 2a, 2b in such a way that, moving the clip 10, it is possible to adjust the internal size of the harness.

The position of the clip 10 is limited in the upper part by two buckles 16, 18, suitably inserted in the strap.

Two plastic rings 22 keep joined the portions 2a and 2b of the strap where the strap 2 is folded over itself for keeping the rings 12 and 14.

Two strap portions 2a, 2b pass therefore into the rings 12 and 14, fold over themselves, pass again into the buckles 16, 18 and end in correspondence of two small buckles 34, 36 sliding on the initial parts of the same portions 2a, 2b.

In this embodiment the position of the clip 10 is also limited in the lower part by two buckles 30, 32 inserted in the same straps.

The lower parts of the belly and front straps, not shown in figure, can be simple or padded, and can be joined by a lower connecting strap, as in the embodiments previously shown.

The presence of the two buckles 6 and 8, inserted into the straps in correspondence of the lateral connecting points, allows to better the aesthetics of the harness and contemporaneously to strengthen the connecting points.

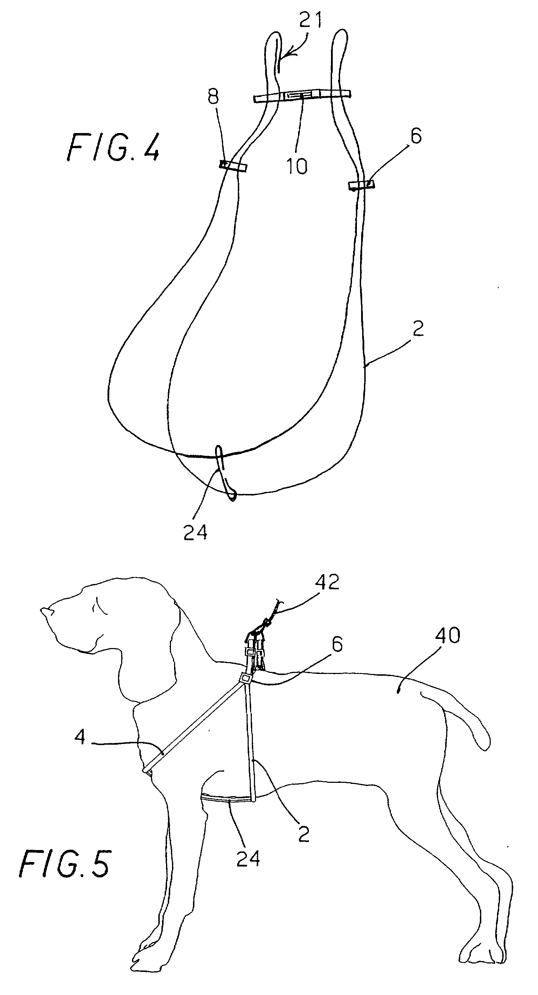

In figure 4 is schematically shown an harness according to the invention realised by means of only one strap 2.

In figure it is evident that the front strap, the belly strap and the upper connecting element are made of a single strap 2, having the ends joined in point 21, closed as a loop and partially folded over itself.

In figure are also shown schematically the two lateral buckles 6, 8, the clip 10 and a lower strap 24 joining the belly and the front straps.

In figure 5 is shown a harness, realised according to the invention, applied to a dog 40. In particular are visible the belly strap 2, the front strap 4, the lower connecting strap 24, a lateral connecting strap 6, and a leash attached to the upper end of the harness.

The straps forming the harnesses illustrated above can be made of leather, nylon or other similar materials.

## Claims

1. An animal harness for animals of the type comprising a belly strap (2b) surrounding the animal belly, a front strap (4b) surrounding the neck front area, an upper connecting element provided with a releasable clip (10) which closes the harness in the upper part and means (12, 14) for coupling the harness to a leash, **characterised in that** said harness is realised by the combination of two strap portions (2, 4), joined together in at least two lateral connecting points (6, 8), and wherein at least one (2) of the two strap portions continues, beyond said lateral connecting points (6, 8), forming a first and a second part of said upper connecting element.

2. A harness as claimed in claim 1, wherein both the strap portions (2, 4) continue beyond said connecting points (6, 8) and overlap forming said first and second part of said upper connecting element.

3. A harness as claimed in claim 2, wherein the two strap portions (2, 4), in correspondence of said lateral connecting points, are overlapped and pass through two lateral buckles (6, 8) which keep joined said straps.

4. A harness as claimed in claim 3, wherein the ends of said strap portions are joined by means of a seam or heat seal in correspondence of said means (12, 14) for coupling to a leash.

5. A harness as claimed in claim 1, wherein each part (2a, 2b) of the upper connecting element is adjustable in length.

6. A animal harness of the type comprising a belly strap (2c) surrounding the animal belly, a front strap (2d) surrounding the front area of the neck, an upper connecting element provided with a releasable clip (10) which closes the harness in the upper part and means (12, 14) for coupling the harness to a leash, **characterised in that** said belly strap (2c), said front strap (2d) and said upper connecting element are realised by means of a single strap portion (2), having the ends joined together for forming a loop, and partially folded over itself.

7. A harness as claimed in claim 6, wherein said strap portion (2) forming a loop is folded over itself in two points in order to form two half rings, said half rings being partially overlapped in order to form a first (2a) and a second (2b) part of said upper connecting element, and being joined in two lateral connecting points (6, 8), and being partially separated for forming said belly strap (2c) and said front strap (2d).

8. A harness as claimed in claim 1 or 7, wherein said releasable clip (10) comprises a first portion (10a) and a second portion (10b) which can be positioned on the corresponding first (2a) and second (2b) part of the upper connecting element in a desired position above said lateral connecting points (6, 8), in order to adjust the internal size of the harness and adapt it to animals of different size.

9. A harness as claimed in claim 8, wherein each portion of the releasable clip (10) can slide on the corresponding part of the upper connecting element with a travel limited on the upper part by a movable stop element (16, 18).

10. A harness as claimed in any of the preceding claims, wherein said belly strap and said front strap are internally covered by a soft material allowing the perspiration.

11. A harness as claimed in any of the preceding claims, wherein said belly strap and said front strap are joined in the middle by a fixed spacing strap.

## Patentansprüche

1. Führungsgurt für Tiere von der Art, welche einen Bauchgurt (2b) aufweist, der den Bauchbereich des Tieres umschließt, sowie einen Brustgurt (4b), welcher den vorderen Halsbereich umschließt, ein oberes Verbindungsteil, das mit einem lösbaren Verschlussteil (10) versehen ist, welches den Führungsgurt im oberen Abschnitt schließt, sowie Einrichtungen (12, 14) zum Ankoppeln des Führungsgurts an eine Leine, **dadurch gekennzeichnet, dass** der Führungsgurt durch die Kombination aus zwei Gurtabschnitten (2, 4) gebildet ist, die an mindestens zwei seitlichen Verbindungspunkten (6, 8) miteinander verbunden sind, und bei welchem mindestens (2) einer der beiden Gurtabscbnitte über die seitlichen Verbindungspunkte (6, 8) hinaus weitergeführt ist und dabei einen ersten und zweiten Abschnitt des oberen Verbindungsteils bildet.

2. Führungsgurt nach Anspruch 1, bei welchem beide Gurtabschnitte (2, 4) über die seitlichen Verbindungspunkte (6, 8) hinaus weitergeführt sind und sich überdecken, wobei sie den ersten und zweiten Abschnitt des oberen Verbindungsteils bilden.

3. Führungsgurt nach Anspruch 2, bei welchem sich die beiden Gurtabschnitte (2, 4) in Entsprechung zu den seitlichen Verbindungspunkten überdecken und durch zwei seitliche Schnallen (6, 8) verlaufen, welche die Gurte in Verbindung miteinander halten.

4. Führungsgurt nach Anspruch 3, bei welchem die Enden der Gurtabscbnitte mittels einer Naht oder einer Heißversiegelung in Entsprechung zu den Mitteln (12, 14) zum Ankoppeln an eine Leine miteinander verbunden sind.

5. Führungsgurt nach Anspruch 1, bei welchem jeder Teil (2a, 2b) des oberen Verbindungsteils längenverstellbar ist.

6. Fübrungsgurt von der Art, welche einen Bauchgurt (2c) aufweist, der den Bauchbereich des Tieres umschließt, sowie einen Brustgurt (2d), welcher den vorderen Halsbereich umschließt, ein oberes Verbindungsteil, das mit einem lösbaren Verschlussteil (10) zum Ankoppeln des Führungsgurts an eine Leine versehen ist, **dadurch gekennzeichnet, dass** der Bauchgurt (2c), der Brustgurt (2d) und das obere Verbindungsteil mittels eines einzigen Gurtteils (2) ausgeführt sind, dessen Enden zur Bildung einer Schlaufe miteinander verbunden sind und welches teilweise umgeschlagen ist.

7. Führungsgurt nach Anspruch 6, bei welchem das eine Schlaufe bildende Gurtteil (2) an zwei Punkten umgeschlagen ist, um zwei halbe Ringe zu bilden, wobei die halben Ringe sich teilweise überdecken, um so einen ersten (2a) und einen zweiten (2b) Teil des oberen Verschlussteils zu bilden, und wobei sie an zwei seitlichen Verbindungspunkten (6, 8) miteinander verbunden und teilweise voneinander getrennt sind, um den Bauchgurt (2c) und den Brustgurt (2d) zu bilden;

8. Führungsgurt nach Anspruch 1 oder 7, bei welchem das lösbare Verschlussteil (10) einen ersten Abschnitt (10a) und einen zweiten Abschnitt (10b) aufweist, wobei die beiden Abschnitte auf dem entsprechenden ersten (2a) und zweiten (2b) Abschnitt des oberen Verbindungsteils an einer gewünschten Position oberhalb der seitlichen Verbindungspunkte (6, 8) positionierbar sind, um die Innengröße des Führungsgurts einzustellen und diesen an Tiere unterschiedlicher Größe anzupassen.

9. Führungsgurt nach Anspruch 8, bei welchem jeder Abschnitt des lösbaren Verschlussteils (10) auf dem entsprechenden Abschnitt des oberen Verbindungsteils mit einer Weglänge gleiten kann, die auf dem oberen Abschnitt durch ein bewegliches Anschlagteil (16, 18) begrenzt ist.

10. Führungsgurt nach einem der vorhergehenden Ansprüche, bei welchem der Bauchgurt und der Brustgurt auf der Innenseite mit einem weichen atmungsaktiven Material überzogen sind.

11. Führungsgurt nach einem der vorhergehenden Ansprüche, bei welchem der Bauchgurt und der Brustgurt in der Mitte mittels eines befestigten Abstandsgurts miteinander verbunden sind.

## Revendications

1. Harnais pour animal du type comprenant une sangle ventrière (2b) entourant le ventre de l'animal, une sangle avant (4b) entourant la zone avant de l'encolure, un élément de connexion supérieur muni d'un clip détachable (10) qui ferme le harnais à la partie supérieure et un moyen (12, 14) pour accoupler le harnais à une laisse, **caractérisé en ce que** ledit harnais est réalisé en combinant deux parties de sangle (2, 4), réunies en au moins deux points de connexion latéraux (6, 8) et **caractérisé en ce qu'**au moins une (2) des deux parties de sangle continue au delà desdits points de connexion latéraux (6, 8), formant une première et une seconde parties dudit élément de connexion supérieur.

2. Harnais selon la revendication 1, **caractérisé en ce que** les deux parties de sangles (2, 4) continuent au delà desdits points de connexion (6, 8) et se chevauchent en formant lesdites première et seconde parties dudit élément de connexion supérieur.

3. Harnais selon la revendication 2, **caractérisé en ce que** les deux parties de sangle (2, 4) en correspondance avec lesdits points de connexion latéraux, se chevauchent et passent par deux boucles latérales (6, 8) qui gardent lesdites sangles réunies.

4. Harnais selon la revendication 3, **caractérisé en ce que** les extrémités desdites parties de sangle sont réunies au moyen d'une couture ou thermosoudure en correspondance avec ledit moyen (12, 14) pour accouplement à une laisse.

5. Harnais selon la revendication 1, **caractérisé en ce que** chaque partie (2a, 2b) de l'élément de connexion supérieur est réglable en longueur.

6. Harnais pour animal du type comprenant une sangle ventrière (2c) entourant le ventre de l'animal, une sangle avant (2d) entourant la zone avant de l'encolure, un élément de connexion supérieur muni d'un clip détachable (10) qui ferme le harnais à la partie supérieure et un moyen (12, 14) pour accoupler le harnais à une laisse, **caractérisé en ce que** ladite sangle ventrière (2c), ladite sangle avant (2d) et ledit élément de connexion supérieur sont réalisés au moyen d'une seule partie de sangle (2) ayant les extrémités réunies pour former une boucle, et partiellement repliée sur elle-même.

7. Harnais selon la revendication 6, **caractérisé en ce que** ladite partie de sangle (2) formant une boucle est repliée sur elle-même en deux points afin de former deux demi-anneaux, lesdits demi-anneaux se chevauchant partiellement afin de former une première (2a) et une deuxième (2b) parties dudit élément de connexion supérieur, et étant réunies en deux points de connexion latéraux (6, 8) et étant partiellement séparés pour former ladite sangle ventrière (2c) et ladite sangle avant (2d).

8. Harnais selon la revendication 1 ou 7, **caractérisé en ce que** ledit clip détachable (10) comprend une première partie (10a) et une seconde partie (10b) qui peuvent être positionnées sur les première (2a) et seconde (2b) parties correspondantes de l'élément de connexion supérieur à une position souhaitée au-dessus desdits points de connexion latéraux (6, 8) afin de régler la dimension interne du harnais et de l'adapter aux animaux de taille différente.

9. Harnais selon la revendication 8, **caractérisé en ce que** chaque partie du clip détachable (10) peut coulisser sur la partie correspondante de l'élément de connexion supérieur avec un déplacement limité sur la partie supérieure par un élément de butée mobile (16, 18).

10. Harnais selon l'une-desprécédentes revendications, **caractérisé en ce que** ladite sangle ventrière et ladite sangle avant sont recouvertes intérieurement par une matière tendre permettant la transpiration.

11. Harnais selon l'une des précédentes revendications **caractérisé en ce que** ladite sangle ventrière et ladite sangle avant sont réunies au milieu par une sangle d'écartement fixe.
